# EUROPEAN PATENT APPLICATION

(11) **EP 4 589 207 A1**
(43) Date of publication of application: **23.07.2025**
(21) Application number: 23865502.1
(22) Date of filing: 11.09.2023
(51) Int. Cl.: F24F 11/38, F24F 11/49, F24F 11/64, F24F 11/86, F24F 11/88, G06N 20/00, G06Q 10/04

(54) **APPARATUS-PERFORMANCE-VALUE PREDICTION METHOD, SYSTEM, AND PROGRAM**

(30) Priority: 12.09.2022 JP 2022144616
(71) Applicant: DAIKIN INDUSTRIES, LTD., Osaka-shi, Osaka 530-0001 (JP)
(72) Inventor: GOTO, Aoi, Osaka-Shi, Osaka 530-0001 (JP); OKAMOTO, Masakazu, Osaka-Shi, Osaka 530-0001 (JP); YURA, Yoshinori, Osaka-Shi, Osaka 530-0001 (JP); FUJIMOTO, Shuji, Osaka-Shi, Osaka 530-0001 (JP); SADAI, Shizuka, Osaka-Shi, Osaka 530-0001 (JP)
(74) Representative: Goddar, Heinz J.
(86) International application number: PCT/JP2023/033109
(87) International publication number: WO 2024/058149

(57) **Abstract**

A performance value reflecting a variation in an individual device at the time of manufacture or a variation in a state at the time of installation of the device is obtained. A device performance value prediction method according to an embodiment of the present disclosure includes a step of acquiring data in a state in which a device is installed; and a step of predicting, by using the data in the state in which the device is installed and at least a reference model, a performance value in an installed state, corresponding to a predetermined period of the device.

## Description

### TECHNICAL FIELD

This disclosure relates to a device performance value prediction method, system, and program.

### BACKGROUND

Conventionally, it is known to diagnose a device, using a performance value, such as Coefficient of Performance (COP) for air conditioners and the like (Patent Document 1). In Patent Document 1, a device is diagnosed by collecting operation data of an air conditioner, and calculating individual characteristic surface data corrected with respect to a device characteristic database (a data group covering operating conditions that satisfy the specifications of air conditioners) to correspond to the operation data.

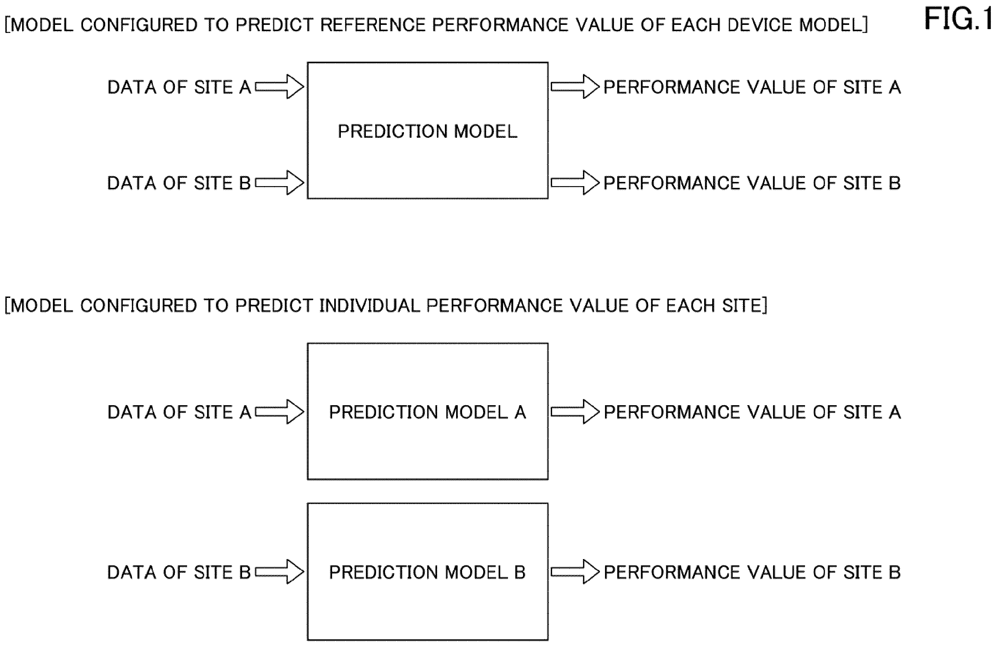

When a device is diagnosed by using machine learning, as illustrated in FIG. 1, a case in which a model configured to predict a reference performance value of each device type (that is, a machine learning model generated for each device type) is used or a case in which a model configured to predict an individual performance value of each site (that is, a machine learning model generated for each site where a device is installed) is used is conceivable. For example, an anomaly of a device can be detected by comparing a performance value in a normal operating state predicted by each model in FIG. 1 with an actual performance value.

### Related Art Document

### Patent Document

[Patent Document 1] Japanese Patent No. 6750091

### SUMMARY OF THE INVENTION

### Problem to be solved by the invention

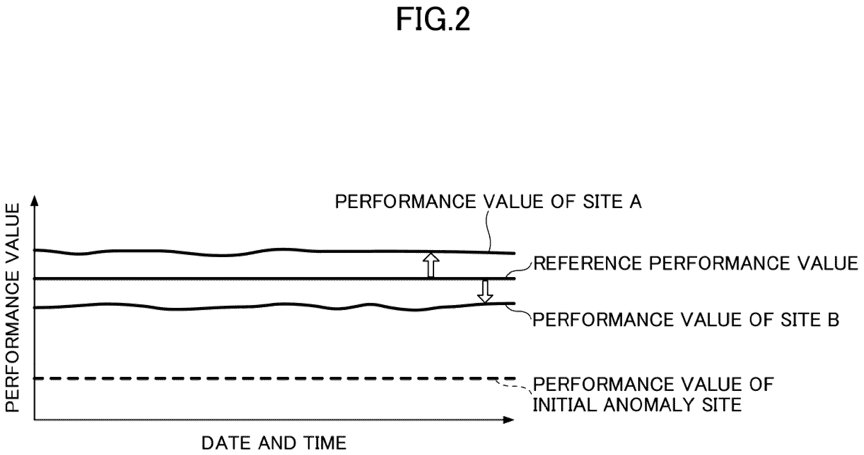

However, as illustrated in FIG. 2, there are the following problems in the model configured to predict the reference performance value of each device type and the model configured to predict the individual performance value of each site.

There are variations in the performance value of each site. In the model configured to predict the reference performance value of each device type, a deviation between the reference performance value of each device type (a reference performance value in FIG. 2) and the performance value of each site (a performance value of a site A and a performance value of a site B in FIG. 2) is not reflected.

In the model configured to predict the individual performance value of each site, if there is an initial anomaly in a site (a performance value of an initial anomaly site in FIG. 2), a model that correctly predicts the individual performance value of each site cannot be generated.

In the present disclosure, it is an object to obtain a performance value reflecting a variation in an individual device at the time of manufacture or a variation in a state at the time of installation of the device.

### Means for Solving the Problem

A device performance value prediction method according to a first aspect of the present disclosure includes:
a step of acquiring data in a state in which a device is installed; and
a step of predicting, by using the data in the state in which the device is installed and at least a reference model, a performance value in an installed state, corresponding to a predetermined period of the device.

According to the first aspect of the present disclosure, a performance value reflecting a variation in an individual device at the time of manufacture or a variation in a state at the time of installation of the device can be obtained.

A device performance value prediction method according to a second aspect of the present disclosure is the device performance value prediction method according to the first aspect. The step of the acquiring includes acquiring the data in the state where the device is installed in predetermined sites. The step of the predicting includes predicting, by using the data in the state where the device is installed in the predetermined sites and at least the reference model configured to predict a reference performance value of the device from data of the device generated for each device type of the device, a performance value obtained by correcting an individual difference between the sites.

According to the second aspect of the present disclosure, by predicting the reference performance value, which is a reference performance value for each device type, by the reference model and correcting the reference performance value, the performance value reflecting a variation between the sites can be obtained.

A device performance value prediction method according to a third aspect of the present disclosure is the device performance value prediction method according to the second aspect. The step of the predicting includes predicting, by using two models including the reference model and a model configured to correct the reference performance value, the performance value obtained by correcting the individual difference between the sites.

According to the third aspect of the present disclosure, the explanatory variables can be reduced by dividing into two models.

A device performance value prediction method according to a fourth aspect of the present disclosure is the device performance value prediction method according to the first aspect. The step of the predicting includes:
predicting, by using the data in the state in which the device is installed and the reference model, a reference performance value of the device; and
predicting, by using the data in the state in which the device is installed and a correction model configured to correct the reference performance value of the device predicted by the reference model, the performance value in the installed state, corresponding to the predetermined period of the device.

According to the fourth aspect of the present disclosure, the explanatory variables can be reduced by dividing into two models.

A device performance value prediction method according to a fifth aspect of the present disclosure is the device performance value prediction method according to the fourth aspect, and further includes a step of generating the correction model by performing learning with data at the predetermined period in the state where the device is installed, and performing learning using data including at least an operating condition of the device as an explanatory variable.

According to the fifth aspect of the present disclosure, the explanatory variables can be reduced by dividing into two models.

A device performance value prediction method according to a sixth aspect of the present disclosure is the device performance value prediction method according to the first aspect. The step of the predicting includes predicting ,by using the data in the state in which the device is installed and a model generated using the reference model, the performance value in the installed state, corresponding to the predetermined period of the device.

According to the sixth aspect of the present disclosure, the corrected performance value can be predicted by a single model.

A device performance value prediction method according to a seventh aspect of the present disclosure is the device performance value prediction method according to the sixth aspect, and further includes a step of performing additional learning on the reference model with data at the predetermined period in the state in which the device is installed.

According to the seventh aspect of the present disclosure, the corrected performance value can be predicted by a single model.

A device performance value prediction method according to an eighth aspect of the present disclosure is the device performance value prediction method according to any of the first to seventh aspects, and further includes a step of calculating an index related to performance degradation from the predicted performance value of the device and the performance value of the device calculated from the acquired data of the device.

According to the eighth aspect of the present disclosure, performance degradation reflecting the variation in the individual device at the time of manufacture or the variation in the state at the time of installation of the device can be diagnosed.

A device performance value prediction method according to a ninth aspect of the present disclosure is the device performance value prediction method according to the eighth aspect, and further includes a step of providing a notification as the performance degradation by using the calculated index related to the performance degradation.

According to the ninth aspect of the present disclosure, an administrator or a user of the device can know performance degradation reflecting the variation in the individual device at the time of manufacture or the variation in the state at the time of installation of the device.

A device performance value prediction method according to a tenth aspect of the present disclosure is the device performance value prediction method according to the fourth aspect or the fifth aspect. A device used to generate the correction model is the same device as and of the same device type as the device to be predicted.

According to the tenth aspect of the present disclosure, the correction model can be generated using the data of the device in a new site.

A device performance value prediction method according to an eleventh aspect of the present disclosure is the device performance value prediction method according to the fourth aspect or the fifth aspect. A device used to generate the correction model is one or more different devices of the same device type as the device to be predicted.

According to the eleventh aspect of the present disclosure, a correction model can be generated using the data of the device in an existing site.

A device performance value prediction method according to a twelfth aspect of the present disclosure is the device performance value prediction method according to the fourth aspect or the fifth aspect. Devices used to generate the correction model are the same devices of the same device type as the device to be predicted and one or more different devices of the same device type as the device to be predicted.

According to the twelfth aspect of the present disclosure, the correction model can be generated using the data of the device in a new site and the data in an existing site.

A device performance value prediction method according to a thirteenth aspect of the present disclosure is the device performance value prediction method according to the fourth aspect or the fifth aspect. Training data of the reference model and the correction model are test data, field data (market operation data), or simulation data.

According to the thirteenth aspect of the present disclosure, learning can be performed with various data.

A device performance value prediction method according to a fourteenth aspect of the present disclosure is the device performance value prediction method according to the fourth aspect or the fifth aspect. Training data of the reference model and the correction model are data when the device is in a normal operating state.

According to the fourteenth aspect of the present disclosure, the performance value when the device is in a normal operating state can be predicted.

A device performance value prediction system according to a fifteenth aspect of the present disclosure includes a controller configured to predict a performance value in an installed state, corresponding to a predetermined period of a device. The controller acquires data in the state in which the device is installed, and predicts, by using the data in the state in which the device is installed and at least a reference model, the performance value in the installed state, corresponding to the predetermined period of the device.

A device performance value prediction system according to a sixteenth aspect of the present disclosure is the device performance value prediction system according to the fifteenth aspect. The controller predicts, by using the data in the state in which the device is installed and the reference model, a reference performance value of the device, and predicts, by using the data in the state in which the device is installed and a correction model configured to correct the reference performance value of the device predicted by the reference model, the performance value in the installed state, corresponding to the predetermined period of the device.

A device performance value prediction system according to a seventeenth aspect of the present disclosure is the device performance value prediction system according to the fifteenth aspect. The controller predicts, by using the data in the state in which the device is installed and a model generated by using the reference model, the performance value in the installed state, corresponding to the predetermined period of the device.

A program according to an eighteenth aspect of the present disclosure causes a device performance value prediction system, including a controller configured to predict a performance value in an installed state, corresponding to a predetermined period of a device, to perform:
a procedure of acquiring data in the state in which the device is installed; and
a procedure of predicting, by using the data in the state in which the device is installed and at least a reference model, the performance value in the installed state, corresponding to the predetermined period of the device.

### BRIEF DESCRIPTION OF THE DRAWINGS

[FIG. 1] FIG. 1 is a diagram for explaining a method of predicting a performance value.
[FIG. 2] FIG. 2 is a diagram for explaining a method of predicting the performance value.
[FIG. 3] FIG. 3 is an overall configuration example according to an embodiment of the present disclosure.
[FIG. 4] FIG. 4 is a hardware configuration diagram of a device performance value prediction apparatus and a device performance value diagnosis apparatus according to the embodiment of the present disclosure.
[FIG. 5] FIG. 5 is a functional block diagram of a controller according to an embodiment of the present disclosure (when two models are being generated).
[FIG. 6] FIG. 6 is an example of predicting a performance value, using two models according to the embodiment of the present disclosure.
[FIG. 7] FIG. 7 is a functional block diagram of a controller according to an embodiment of the present disclosure (when additional learning is performed on a reference model).
[FIG. 8] FIG. 8 is a functional block diagram of a controller according to an embodiment of the present disclosure (in Parallel Connection).
[FIG. 9] FIG. 9 is a functional block diagram of a controller according to an embodiment of the present disclosure (in Series 1).
[FIG. 10] FIG. 10 is a functional block diagram of a controller according to an embodiment of the present disclosure (in Series 2).
[FIG. 11] FIG. 11 is a functional block diagram of a controller according to an embodiment of the present disclosure (when additional learning is used).
[FIG. 12] FIG. 12 is an example of a model according to an embodiment of the present disclosure.
[FIG. 13] FIG. 13 is a functional block diagram of a controller according to an embodiment of the present disclosure.
[FIG. 14] FIG. 14 is a functional block diagram of a controller according to an embodiment of the present disclosure.
[FIG. 15] FIG. 15 is a functional block diagram of a controller according to an embodiment of the present disclosure.
[FIG. 16] FIG. 16 is a hardware configuration diagram of an air conditioner according to an embodiment of the present disclosure.
[FIG. 17] FIG. 17 is a graph for explaining the degree of subcooling (SC) according to an embodiment of the present disclosure.
[FIG. 18] FIG. 18 is a graph for explaining the degree of superheating (SH) according to an embodiment of the present disclosure.
[FIG. 19] FIG. 19 is a diagram for explaining the thermal permeability (KA) according to an embodiment of the present disclosure.
[FIG. 20] FIG. 20 is a flowchart of a learning process according to the embodiment of the present disclosure.
[FIG. 21] FIG. 21 is a flowchart of a prediction process (in Parallel Connection) according to the embodiment of the present disclosure.
[FIG. 22] FIG. 22 is a flowchart of a prediction process (in Series 1) according to the embodiment of the present disclosure.
[FIG. 23] FIG. 23 is a flowchart of a prediction process (in Series 2) according to the embodiment of the present disclosure.
[FIG. 24] FIG. 24 is a flowchart of a prediction process (in the additional learning) according to the embodiment of the present disclosure.

### DESCRIPTION OF THE EMBODIMENTS

In the following, embodiments of the present disclosure will be described based on the drawings.

### <Example of Overall Configuration>

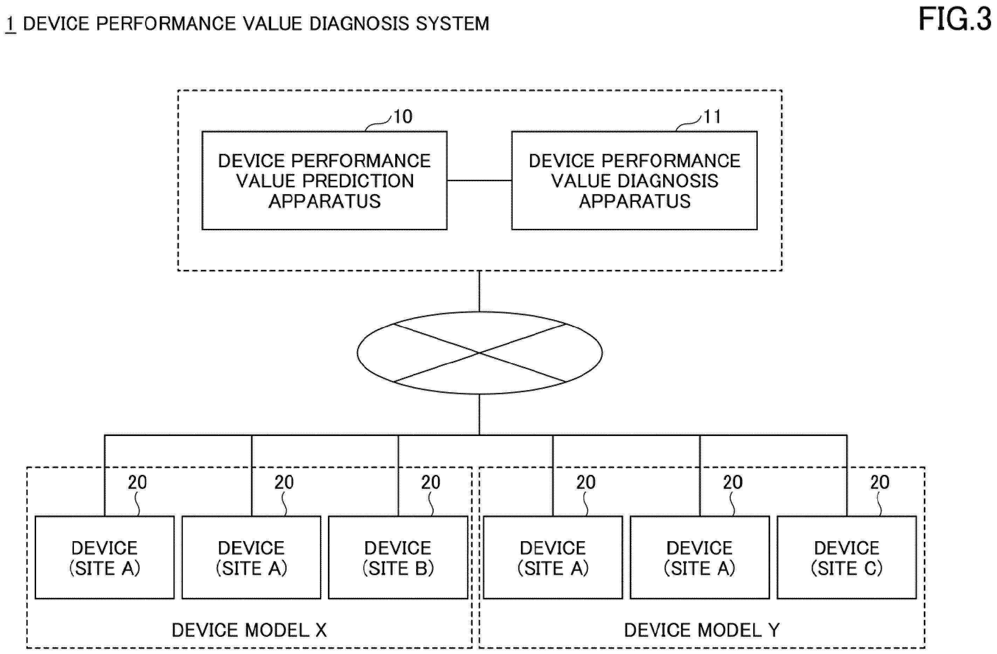

FIG. 3 is an overall configuration example of the present disclosure. A device performance value diagnosis system 1 includes a device performance value prediction apparatus 10, a device performance value diagnosis apparatus 11, and devices 20.

The device performance value prediction apparatus 10 and the device performance value diagnosis apparatus 11 can transmit and receive data to and from the device 20 via a suitable network. The device performance value prediction apparatus 10 and the device performance value diagnosis apparatus 11 can transmit and receive data to and from each other via a suitable network. Here, in FIG. 3, the device performance value prediction apparatus 10 and the device performance value diagnosis apparatus 11 are described as separate apparatuses, but the device performance value prediction apparatus 10 and the device performance value diagnosis apparatus 11 may be implemented as a single apparatus.

The device performance value prediction apparatus 10 is an apparatus configured to predict a performance value in a normal operating state of the device 20. Specifically, the device performance value prediction apparatus 10 acquires data of the device 20 from the device 20. The device performance value prediction apparatus 10 predicts a reference performance value of the device 20 from the data of the device 20, using a reference model, and predicts a performance correction value of the device 20 from the data of the device 20, using a correction model. The device performance value prediction apparatus 10 calculates a performance value of the device 20 from the reference performance value and the performance correction value. The performance correction value of the device 20 depends on either an individual difference at the time of manufacture of the device 20 or a state difference at the time of installation of the device 20.

The device performance value diagnosis apparatus 11 diagnoses the device 20. Specifically, the device performance value diagnosis apparatus 11 diagnoses the device 20 by comparing the performance value of the device 20 calculated by the device performance value prediction apparatus 10 from the reference performance value and the performance correction value with an actual performance value (a measured performance value) of the device 20.

The device 20 may be any device. For example, the device 20 is an air conditioner. The devices 20 may include multiple types of devices (for example, in FIG. 3, a device of Model X and a device of Model Y). Additionally, the building, floor, and the like (hereinafter, also referred to as sites) where the device 20 is installed may include multiple sites (for example, in FIG. 3, Site A, Site B, and Site C). For example, in FIG. 3, a device of Model X and a device of Model Y are installed in Site A, a device of Model X is installed in Site B, and a device of Model Y is installed in Site C.

Here, in the embodiment of the present disclosure, a performance value obtained by correcting a variation in the devices between the sites (that is, an individual difference) can be predicted. The individual difference between the sites may be an individual difference occurring between different buildings (for example, a variation occurring between Building A and Building B) or an individual difference occurring between installation locations, such as floors, areas, and rooms in the same building (for example, a variation occurring between Installation Location a and Installation Location b in Building A).

Here, in FIG. 3, the case where the device performance value prediction apparatus 10 and the device performance value diagnosis apparatus 11 are located remotely, apart from the device 20 (for example, a cloud server) has been described, but at least one of the device performance value prediction apparatus 10 or the device performance value diagnosis apparatus 11 may be located inside the device 20, or may be located in the site where the device 20 is installed.

The system including the device performance value prediction apparatus 10 and the device performance value diagnosis apparatus 11 can acquire data in a state where the device 20 is installed (for example, data in a state where the device 20 is installed in a predetermined site), and predict a performance value in an installed state, corresponding to a predetermined period (for example, in a normal operating state) of the device 20 by using the data in the state where the device 20 is installed and at least a reference model (for example, predict a performance value obtained by correcting an individual difference between sites (reflecting a variation between the sites) by using the data in the state where the device 20 is installed in the predetermined site and at least the reference model configured to predict the reference performance value of the device 20 from the data of the device 20 generated for each device type of the device 20).

For example, the system can predict a performance value obtained by correcting an individual difference between sites by using two models including a reference model and a model for correcting the reference performance value. For example, the system can predict the reference performance value of the device 20 by using the data in the state where the device 20 is installed and the reference model, and predict a performance value in an installed state, corresponding to a predetermined period of the device 20 by using the data in the state where the device 20 is installed and a correction model configured to correct the reference performance value of the device 20 predicted by the reference model. For example, the system can generate the correction model by performing learning with the data in the installed state at the predetermined period of the device 20, and by performing learning using data including at least an operating condition of the device 20 as an explanatory variable.

For example, the system can predict the performance value in the installed state, corresponding to the predetermined period of the device 20 by using the data in the state where the device 20 is installed and the model generated by using the reference model. For example, the system can perform additional learning on the reference model by using data in the installed state at the predetermined period of the device 20.

### <Device Performance Value Prediction Apparatus and Device Performance Value Diagnosis Apparatus >

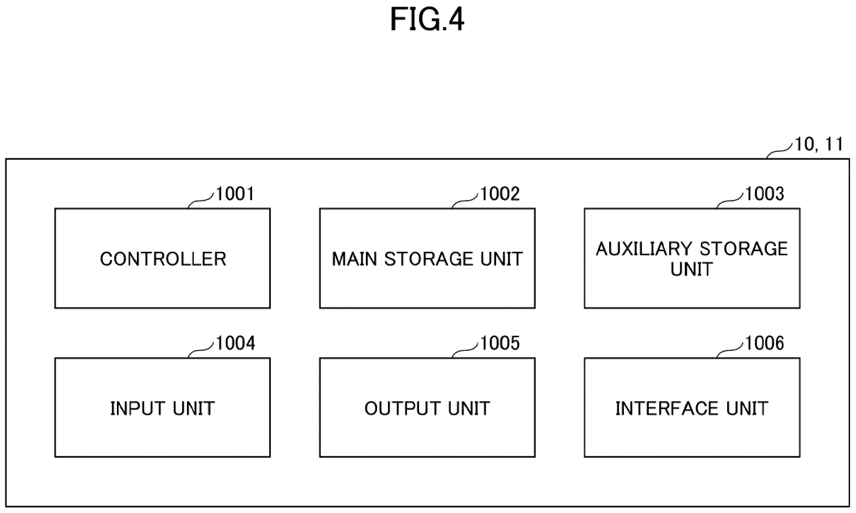

FIG. 4 is a hardware configuration diagram of the device performance value prediction apparatus 10 and the device performance value diagnosis apparatus 11 according to the embodiment of the present disclosure. The device performance value prediction apparatus 10 and the device performance value diagnosis apparatus 11 may include a controller 1001, a main storage unit 1002, an auxiliary storage unit 1003, an input unit 1004, an output unit 1005, and an interface unit 1006. Each of these units will be described below.

The controller 1001 is a processor (for example, a central processing unit (CPU), a graphics processing unit (GPU), and the like) configured to execute various programs installed in the auxiliary storage unit 1003.

The main storage unit 1002 includes a non-volatile memory (read only memory (ROM)) and a volatile memory (random access memory (RAM)). The ROM stores various programs, data, and the like necessary for the controller 1001 to execute various programs installed in the auxiliary storage unit 1003. The RAM provides a work area where various programs are deployed when various programs installed in the auxiliary storage unit 1003 are executed by the controller 1001.

The auxiliary storage unit 1003 is an auxiliary storage device configured to store various programs and information used when various programs are executed.

The input unit 1004 is an input device in which an operator of the device performance value prediction apparatus 10 and the device performance value diagnosis apparatus 11 inputs various instructions to the device performance value prediction apparatus 10 and the device performance value diagnosis apparatus 11.

The output unit 1005 is an output device configured to output internal states of the device performance value prediction apparatus 10 and the device performance value diagnosis apparatus 11 and the like.

The interface unit 1006 is a communication device connected to various sensors and a network and configured to communicate with various sensors and another apparatus.

### <Functional Block>

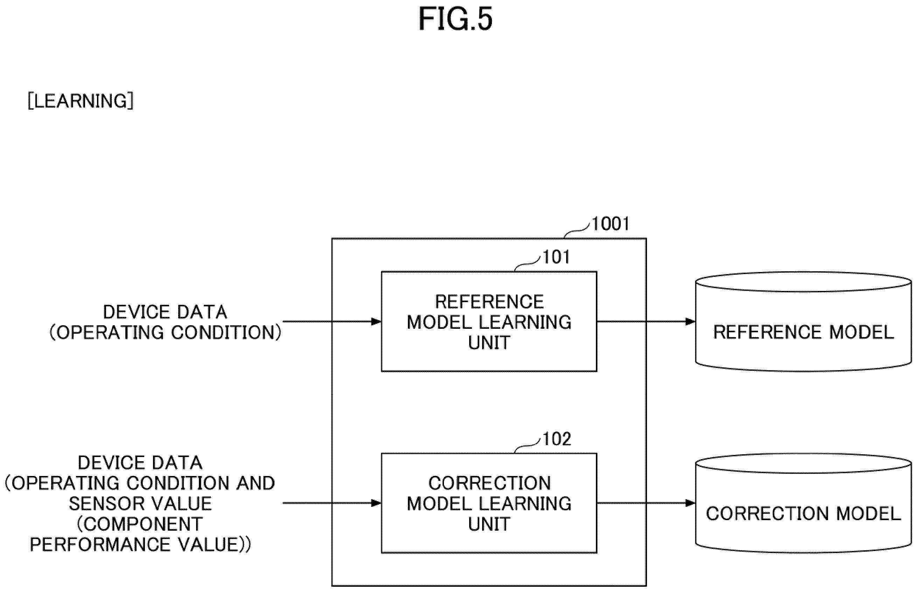

A functional block of the controller 1001 will be described below with reference to FIGS. 5 to 15.

### [Learning]

FIG. 5 is a functional block diagram of the controller 1001 according to the embodiment of the present disclosure (when two models are being generated). FIG. 5 illustrates a learning process. The controller 1001 includes a reference model learning unit 101 and a correction model learning unit 102. Additionally, the controller 1001 functions as the reference model learning unit 101 and the correction model learning unit 102 by executing a program. Each of these units will be described below.

### [Reference Model]

The reference model learning unit 101 generates a reference model and stores the generated reference model in a storage unit.

Specifically, the reference model learning unit 101 acquires training data. For example, the training data is an operating condition of the device 20 and an actual performance value of the device 20 (here, the actual performance value is calculated from the operating condition and a sensor value of the device 20). The reference model learning unit 101 generates the reference model by performing learning using the acquired training data. The reference model is a model configured to output a performance value (a reference performance value) of the device 20 in response to data of the device (for example, an operating condition of the device 20) being input.

Here, the reference model will be described. The reference model predicts a reference performance value based on performance values of multiple devices having individual differences at the time of manufacture and different states at the time of installation. That is, the reference model is a machine learning model trained by associating data of multiple devices having individual differences at the time of manufacture and different states at the time of installation (for example, operating conditions of the devices) with actual performance values of the devices.

For example, the reference model is generated for each device type of the device 20. Specifically, for each device type of the device 20, the reference model learning unit 101 performs learning by associating data of the device 20 of the device type (for example, the operating condition of the device 20) with the actual performance value of the device 20 of the device type.

The reference model is a machine learning model trained by using, at least, data of a device different from a target device (that is, a device for which a performance value is desired to be obtained). That is, the training data of the reference model may include only data of a device different from the target device, or may include both data of a device different from the target device and data of the target device. The training data of the reference model is data when the devices 20 are in a normal operating state. For example, the training data of the reference model may be any of test data (data collected in tests during development or research of the device 20), field data (data collected in the field (for example, log data and cloud data collected in an environment of actual installation)), and simulation data (data simulated by a computer).

### [Correction Model]

The correction model learning unit 102 generates a correction model and stores the generated correction model in a storage unit.

Specifically, the correction model learning unit 102 acquires training data. For example, the training data is an operating condition of the device 20 and an actual component performance value (here, the actual component performance value is calculated from the operating condition and the sensor value of the device 20), and a difference between the reference performance value and the actual performance value (here, the actual performance value is calculated from the operating condition and the sensor value of the device 20) of the device 20 or a ratio of the actual performance value to the reference performance value (the actual performance value is calculated from the operating condition and the sensor value of the device 20). The correction model learning unit 102 generates a correction model by performing learning using the acquired training data. The correction model is a model configured to output a difference between the reference performance value and the actual performance value of the device 20 or a ratio of the actual performance value to the reference performance value (a performance correction value) in response to data of the device 20 (for example, the operating condition and the component performance value of the device 20) being input. That is, the performance correction value indicates "the difference between the performance value in the normal operating state and the reference performance value of the device 20" or "the ratio of the performance value in the normal operating state to the reference performance value of the device 20".

The correction model will now be described. The correction model is a machine learning model configured to correct the reference performance value of the device 20 predicted by the reference model.

The input of the correction model is a parameter having a large correlation with the difference with the reference performance value or the ratio to the reference performance value among the data of the device 20 (that is, a parameter that depends on either the individual difference at the time of manufacture or the state difference at the time of installation). When all data of the device 20 (for example, all operating conditions and all component performance values) are input into the correction model and the difference with the reference performance value or the ratio to the reference performance value is output, the correction model learning unit 102 can use data having a high contribution rate to the increase of the difference or the ratio (for example, an operating condition having high contribution and a component performance value having high contribution), as an input (an explanatory variable) for predicting the performance correction value. For example, the correction model learning unit 102 can determine the optimal explanatory variable of the correction model by multiple regression analysis or the like that determine the optimal explanatory variable of the correction model by the importance of the random forest or the like (the contribution rate to the decrease of the Gini coefficient) during learning.

For example, the parameter having a large correlation with the difference with the reference performance value or the ratio to the reference performance value is a single index among an index related to the refrigerant filling amount of the device, an index related to the heat exchanger performance of the device, an index related to the compressor performance of the device, and an index related to the communication pipe length of the device. Alternatively, the parameter is a value related to two or more indices including one index and another index among an index related to the refrigerant filling amount of the device, an index related to the heat exchanger performance of the device, an index related to the compressor performance of the device, and an index related to the communication pipe length of the device.

The output of the correction model (the performance correction value) is the difference with the reference performance value or the ratio to the reference performance value. The performance correction value depends on either the individual difference at the time of manufacture or the state difference at the time of installation of the device.

For example, the individual difference at the time of manufacture of the device is an individual difference that occurs for each device due to a variation, such as a tolerance for each part or a tolerance during assembly of a product consisting of many parts (such an individual difference affects the performance of the device (for example, a heat exchanger and a compressor)).

For example, the state difference at the time of installation of the device is an initial refrigerant filling amount. If the state difference at the time of installation is the initial refrigerant filling amount, the absolute value of the performance correction value (for example, COP) increases when the initial refrigerant filling amount is small. For example, the state difference at the time of installation may be a value of the weight of a filling pump at the time of installation, a value of the degree of subcooling (SC) at the time of installation, a value of the degree of superheat (SH) at the time of installation, an expansion valve opening degree (an EV opening degree) at the time of installation, or the like. Additionally, for example, the state difference at the time of installation may be a state difference caused by a fin of the heat exchanger falling down or collapsing during transportation or installation.

For example, the correction model is generated for each site where the device 20 is installed. Specifically, for each site where the device 20 is installed, the correction model learning unit 102 performs learning by associating the operating condition and actual component performance value of the device 20 installed in the site with the difference between the reference performance value and the actual performance value or the ratio of the actual performance value to the reference performance value of the device 20 installed in the site.

The training data of the correction model is data when the device 20 is in a normal operating state. For example, the training data of the correction model is any one of test data (data collected in a test during development or research of the device 20), field data (data collected in the field (for example, log data and cloud data collected in the actual installation)), or simulation data (data simulated by a computer).

An example of the device used to generate the correction model will be described below.

For example, the device used to generate the correction model is the same device as and of the same device type as the device to be predicted by the device performance value prediction apparatus 10.

For example, the device used to generate the correction model is one or more different devices of the same device type as the device to be predicted by the device performance value prediction apparatus 10.

For example, the device used to generate the correction model is the same device as and of the same device type as the device to be predicted by the device performance value prediction apparatus 10, and one or more different devices of the same device type.

Hereinafter, the correction for each site and the correction for each device type will be described.

### [Correction for Each Site]

For example, the performance value can be corrected for each site, reflecting the individual difference at the time of manufacture and the state difference at the time of installation of the device. In this case, a reference model is generated for each device type of the device, and a correction model is generated for each site where the device is installed. The reference performance value is predicted by a reference model of the device type that is the same as the device type of the target device (that is, the device for which the performance value is desired to be obtained), and the performance correction value is predicted by a correction model of the site where the target device is installed. Therefore, the variation in the performance value for each site that occurs even if the device type is the same and the device is in a normal operating state can be corrected.

### [Correction for Each Device Type]

Here, the performance value may be corrected for each device type, reflecting the individual difference at the time of manufacture and state difference at the time of installation. In this case, a reference model is generated using data of multiple device types of devices, and a correction model is generated for each device type.

As described, by dividing into two models: the reference model configured to predict the reference performance value and the correction model configured to predict the performance correction value, the explanatory variables can be reduced, and the learning can converge quickly without overlearning.

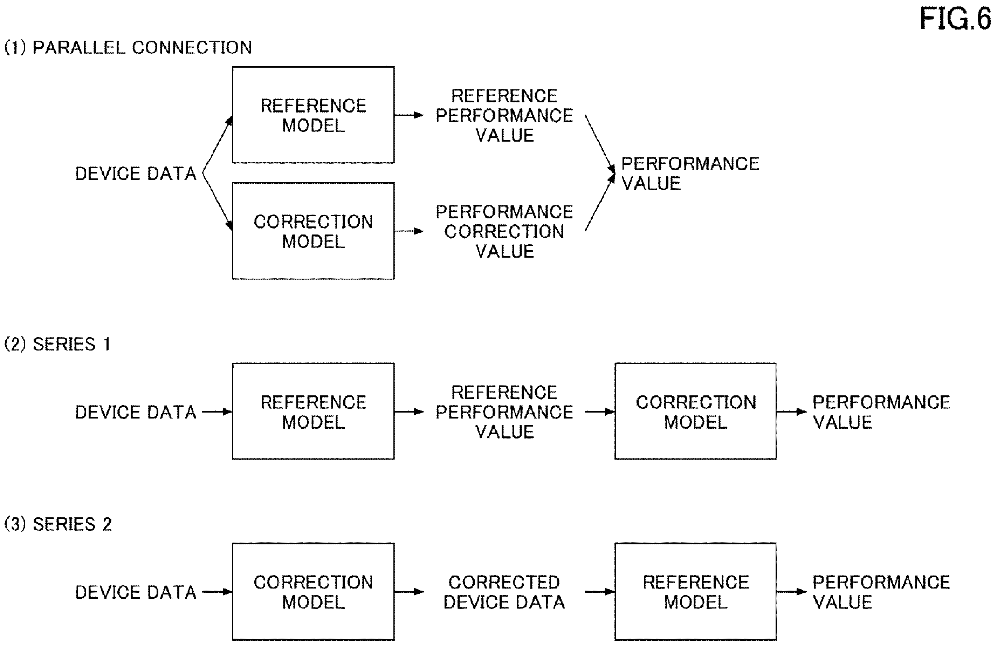

FIG. 6 is an example of predicting the performance value using two models according to the embodiment of the present disclosure.

As illustrated in (1) Parallel Connection in FIG. 6, in the embodiment of the present disclosure, the corrected performance value of the device 20 (that is, the performance value reflecting the variation) can be predicted based on the reference performance value predicted using the reference model (for example, a model generated for each device type, and predicting the reference performance value, which is the performance value for each device type) from the data of the device and the performance correction value predicted using the correction model (for example, a model generated for each site where the device of the device type is installed, and predicting a difference or ratio between the performance value at the site and the reference performance value of the device of the device type) from the data of the device (specifically, the performance correction value is added to or multiplied by the reference performance value).

As illustrated in (2) Series 1 of FIG. 6, in the embodiment of the present disclosure, the reference performance value can be predicted from the data of the device, using the reference model (for example, a model generated for each device type and predicting the reference performance value, which is the performance value for each device type), and the corrected performance value of the device 20 (that is, the performance value reflecting the variation) can be predicted from the reference performance value, using the correction model (for example, a model generated for each site where the device of the device type is installed and predicting the performance value of the device of the device type at the site).

As illustrated in (3) Series 2 of FIG. 6, in the embodiment of the present disclosure, the corrected data of the device can be predicted from the data of the device, using the correction model (for example, a model generated for each site and predicting "corrected data of the device", which is data of the device at a predetermined site (a reference site)), and the corrected performance value of the device 20 (that is, the performance value reflecting the variation) can be predicted from the corrected data of the device, using the reference model (for example, a model generated for each device type and predicting the reference performance value, which is the performance value for each device type).

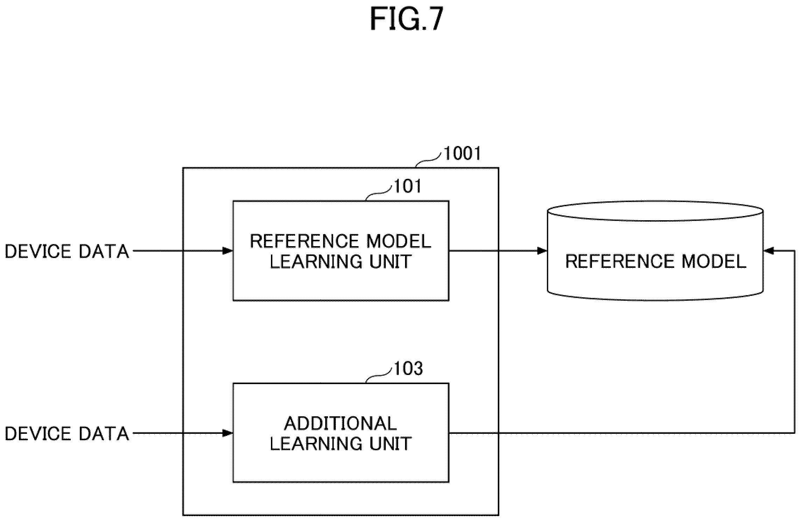

FIG. 7 is a functional block diagram of the controller 1001 according to the embodiment of the present disclosure (when additional learning is performed on the reference model). FIG. 7 illustrates a learning process. The controller 1001 includes a reference model learning unit 101 and an additional learning unit 103. Additionally, the controller 1001 functions as the reference model learning unit 101 and the additional learning unit 103 by executing a program. Hereinafter, for each of these units, the main differences from the case of FIG. 5 will be described.

The reference model learning unit 101 generates a reference model and stores the generated reference model in a storage unit. For example, the reference model learning unit 101 generates a reference model (a model configured to output the reference performance value of the device in response to the data of the device being input) by performing learning using training data (for example, data of the device for each device type and the reference performance value, which is the performance value for each device type).

The additional learning unit 103 performs additional learning on the reference model generated by the reference model learning unit 101, using data of the device 20 (data in the site where the device 20 is installed (the data of the device and the performance value of the device). For example, the additional learning is transfer learning, distillation, and fine tuning.

### [Prediction]

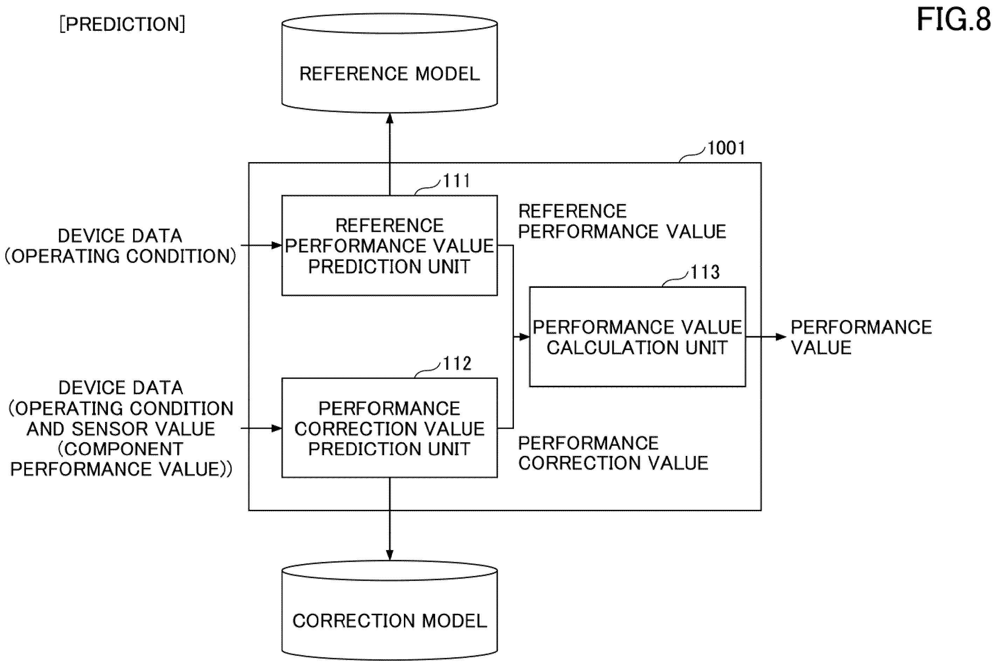

FIG. 8 is a functional block diagram of the controller 1001 according to the embodiment of the present disclosure (in Parallel Connection). FIG. 8 illustrates a prediction process. The controller 1001 includes a reference performance value prediction unit 111, a performance correction value prediction unit 112, and a performance value calculation unit 113. Additionally, the controller 1001 functions as the reference performance value prediction unit 111, the performance correction value prediction unit 112, and the performance value calculation unit 113 by executing a program. Each of these units will be described below.

The reference performance value prediction unit 111 predicts the reference performance value of the device 20 from the data of the device 20, using the reference model. For example, the reference performance value prediction unit 111 inputs the operating condition of the device 20 into the reference model and causes it to output the reference performance value of the device 20.

The performance correction value prediction unit 112 predicts the performance correction value of the device 20 from the data of the device 20, using the correction model. For example, the device performance value prediction apparatus 10 inputs the operating condition and component performance value of the device 20 (here, the component performance value is calculated from the operating condition and the sensor value of the device 20) into the correction model and causes it to output the performance correction value of the device 20.

The performance value calculation unit 113 calculates the performance value of the device 20 based on the reference performance value predicted by the reference performance value prediction unit 111 and the performance correction value predicted by the performance correction value prediction unit 112. For example, the device performance value prediction apparatus 10 adds or multiplies the performance correction value to the reference performance value.

As described, the performance value reflecting the variation in the individual device at the time of manufacture of the device 20 or the variation in the state at the time of installation of the device 20 (for example, a variation between the sites where the device 20 is installed) can be obtained. The explanatory variables can be reduced by dividing into the reference model and the correction model, thereby preventing the prediction accuracy from decreasing due to multicollinearity.

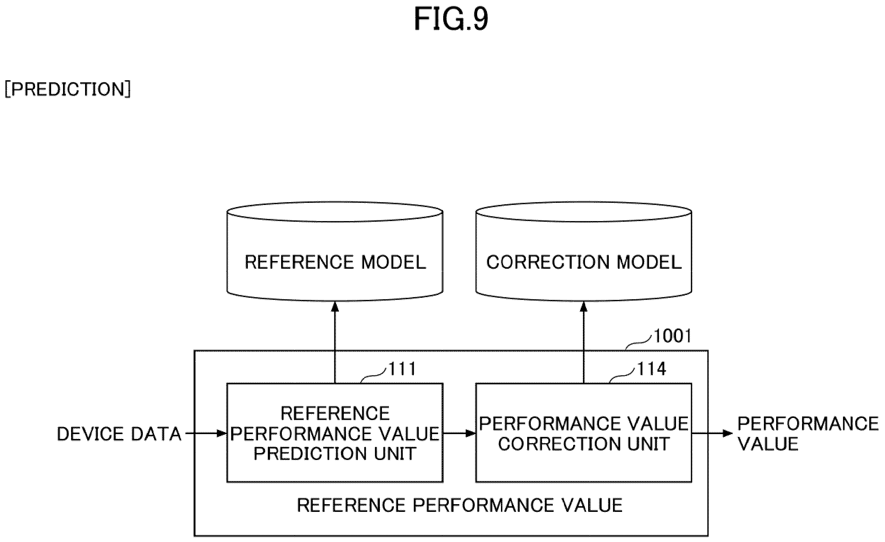

FIG. 9 is a functional block diagram of the controller 1001 according to the embodiment of the present disclosure (in Series 1). FIG. 9 illustrates a prediction process. The controller 1001 includes the reference performance value prediction unit 111 and a performance value correction unit 114. Additionally, the controller 1001 functions as the reference performance value prediction unit 111 and the performance value correction unit 114 by executing a program.

The reference performance value prediction unit 111 predicts the reference performance value of the device 20 from the data of the device 20, using the reference model. Specifically, the reference performance value prediction unit 111 inputs the data of the device 20 into the reference model and causes it to output the reference performance value of the device 20.

The performance value correction unit 114 predicts the corrected performance value of the device 20 from the reference performance value predicted by the reference performance value prediction unit 111, using the correction model (Specifically, a model configured to output the corrected performance value of the device in response to the reference performance value of the device being input). Specifically, the performance value correction unit 114 inputs the reference performance value of the device 20 into the correction model and causes it to output the corrected performance value of the device 20.

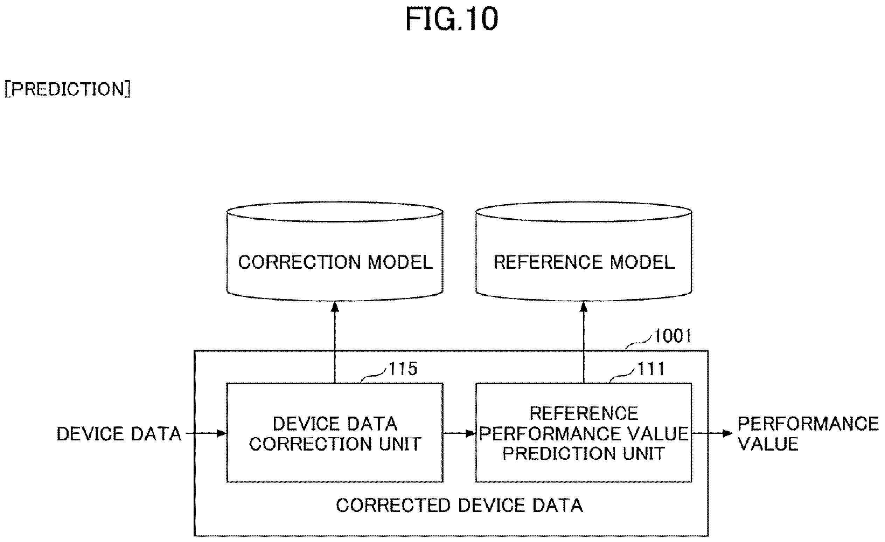

FIG. 10 is a functional block diagram of the controller 1001 according to the embodiment of the present disclosure (in Series 2). FIG. 10 illustrates a prediction process. The controller 1001 includes a device data correction unit 115 and the reference performance value prediction unit 111. Additionally, the controller 1001 functions as the device data correction unit 115 and the reference performance value prediction unit 111 by executing a program.

The device data correction unit 115 predicts the corrected data of the device 20 from the data of the device 20, using the correction model (specifically, a model configured to output the corrected data of the device in response to the data of the device being input). Specifically, the device data correction unit 115 inputs the data of the device 20 into the correction model and causes it to output the corrected data of the device 20.

The reference performance value prediction unit 111 predicts the performance value (that is, the corrected performance value) of the device 20 from the corrected data of the device 20 predicted by the device data correction unit 115, using the reference model. Specifically, the reference performance value prediction unit 111 inputs the corrected data of the device 20 into the reference model and causes it to output the performance value (that is, the corrected performance value) of the device 20.

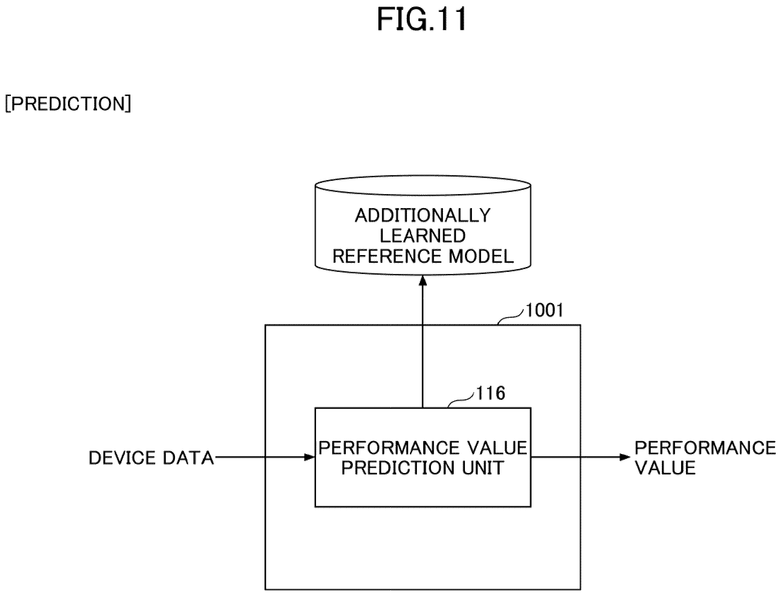

FIG. 11 is a functional block diagram of the controller 1001 according to the embodiment of the present disclosure(in the additional learning). FIG. 11 illustrates a prediction process. The controller 1001 includes a performance value prediction unit 116. Additionally, the controller 1001 functions as the performance value prediction unit 116 by executing a program.

The performance value prediction unit 116 predicts the performance value (that is, the corrected performance value) from data of the device 20, using a model obtained by performing additional learning on the reference model.

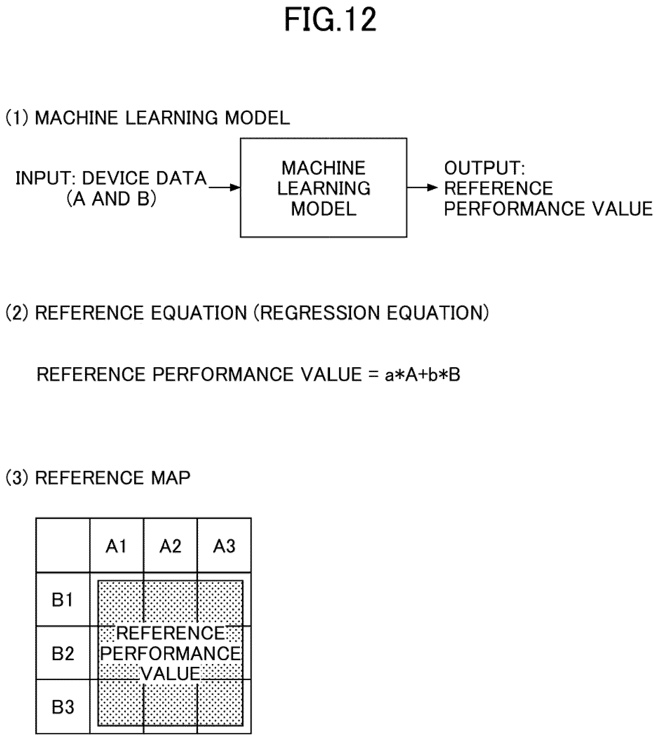

FIG. 12 is an example of a model according to the embodiment of the present disclosure. The reference model and the correction model described in the present specification are not limited to machine learning models, but may be expressions or maps. FIG. 12 illustrates an example of the reference model.

As illustrated in (1) Machine Learning Model of FIG. 12, the model is, for example, a machine learning model. For example, the reference model is a model that is trained so that a reference performance value is output in response to data of the device (for example, A AND B) being input.

As illustrated in (2) Reference Equation (regression equation) of FIG. 12, the model is, for example, an equation (regression equation). For example, the reference equation (regression equation) is an equation (regression equation) that can calculate the reference performance value from the data of the device (for example, A and B).

As illustrated in (3) Reference Map of FIG. 12, the model is, for example, a map (also called a correspondence table). For example, the reference map is a map representing the reference performance value corresponding to each value of the data of the device (for example, A1, A2, A3, B1, B2, and B3).

### [Diagnosis]

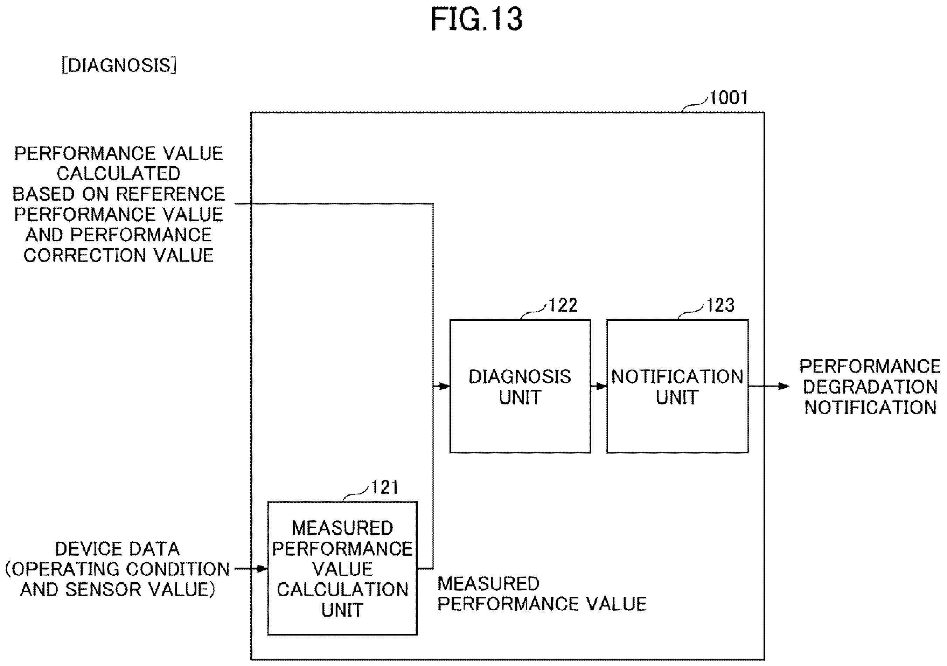

FIG. 13 is a functional block diagram of the controller 1001 according to the embodiment of the present disclosure. FIG. 13 illustrates a diagnosis process. The controller 1001 includes a measured performance value calculation unit 121, a diagnosis unit 122, and a notification unit 123. Additionally, the controller 1001 functions as the measured performance value calculation unit 121, the diagnosis unit 122, and the notification unit 123 by executing a program. Each of these units will be described below. Here, in FIG. 13, the case of Parallel Connection described above will be described, but the same applies to the case of Series 1, Series 2, and the additional learning.

The measured performance value calculation unit 121 calculates the measured performance value (the actual performance value) of the device 20 from the data of the device 20. For example, the measured performance value calculation unit 121 calculates the measured performance value of the device 20 from the operating condition and the sensor value of the device 20.

The diagnosis unit 122 diagnoses the performance value of the device 20. For example, the diagnosis unit 122 calculates an index related to performance degradation from the performance value of the device 20 calculated by the performance value calculation unit 113 (that is, in FIG. 8, the performance value calculated based on the reference performance value and the performance correction value) and the measured performance value of the device 20 calculated by the measured performance value calculation unit 121.

For example, when the training data of the reference model and the correction model are the data when the device 20 is in a normal operating state, the diagnosis unit 122 can diagnose that the performance of the device 20 degrades as the performance value of the device 20 calculated by the performance value calculation unit 113 and the measured performance value of the device 20 calculated by the measured performance value calculation unit 121 deviate.

The notification unit 123 notifies a result of the diagnosis by the diagnosis unit 122 (for example, transmitting the result of the diagnosis to a terminal of an administrator or user of the device 20). For example, the notification unit 123 provides a notification as the performance degradation, using the index related to the performance degradation calculated by the diagnosis unit 122. For example, the notification unit 123 can notify the presence or absence of the degradation of the device 20 and the degree of the degradation of the device 20.

As described, the device 20 can be diagnosed using the performance value of the device 20 obtained with high accuracy.

### [Initial Diagnosis]

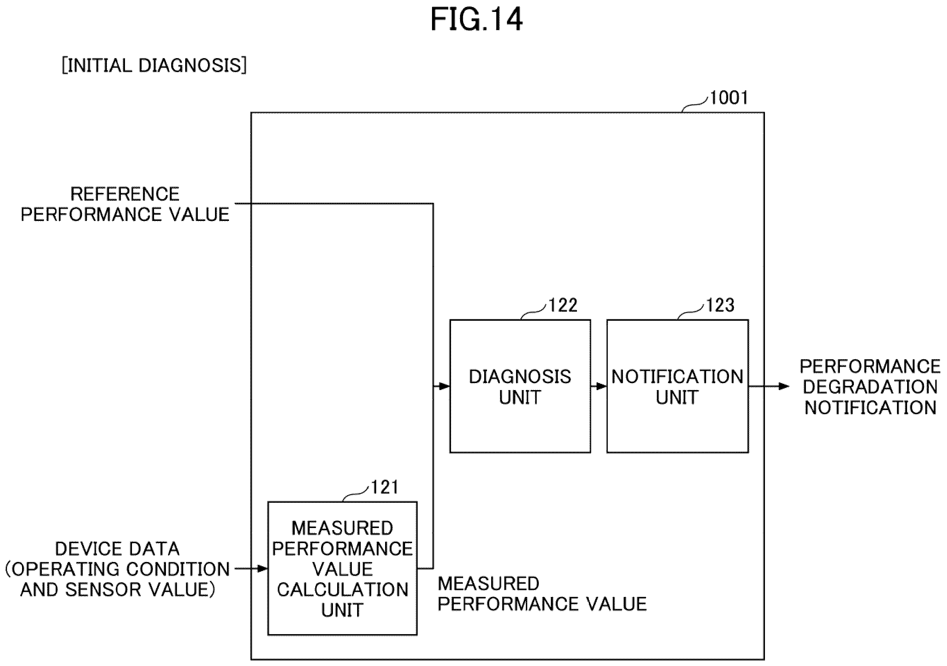

FIG. 14 is a functional block diagram of the controller 1001 according to the embodiment of the present disclosure. FIG. 14 illustrates an initial diagnosis process. The controller 1001 includes the measured performance value calculation unit 121, the diagnosis unit 122, and the notification unit 123. Additionally, the controller 1001 functions as the measured performance value calculation unit 121, the diagnosis unit 122, and the notification unit 123 by executing a program. Each of these units will be described below. Here, in FIG. 14, the case of Parallel Connection described above will be described, but the same applies to the case of Series 1, Series 2, and the additional learning.

The measured performance value calculation unit 121 calculates the measured performance value (the actual performance value) of the device 20 from the data of the device 20. For example, the measured performance value calculation unit 121 calculates the measured performance value of the device 20 from the operating condition and the sensor value of the device 20.

The diagnosis unit 122 diagnoses the performance value of the device 20. Specifically, the diagnosis unit 122 calculates an index related to performance degradation from the reference performance value (that is, in FIG. 8, the reference performance value predicted using the reference model) of the device 20 predicted by the reference performance value prediction unit 111 and the measured performance value of the device 20 calculated by the measured performance value calculation unit 121.

For example, if the training data of the reference model is the data when the device 20 is in a normal operating state, the diagnosis unit 122 can diagnose that the performance of the device 20 degrades as the performance value of the device 20 calculated by the reference performance value prediction unit 111 and the measured performance value of the device 20 calculated by the measured performance value calculation unit 121 deviate.

The notification unit 123 notifies the result of the diagnosis by the diagnosis unit 122 (for example, transmitting the result of the diagnosis to the terminal of the administrator or user of the device 20). For example, the notification unit 123 provides a notification as the performance degradation, using the index related to performance degradation calculated by the diagnosis unit 122. For example, the notification unit 123 can notify the presence or absence of degradation of the device 20 and the degree of degradation of the device 20.

As described, by performing the initial diagnosis of the device 20, using the reference performance value of the device 20, an initial anomaly of the site where the device 20 is installed can be detected.

### [Component Performance Value Calculation]

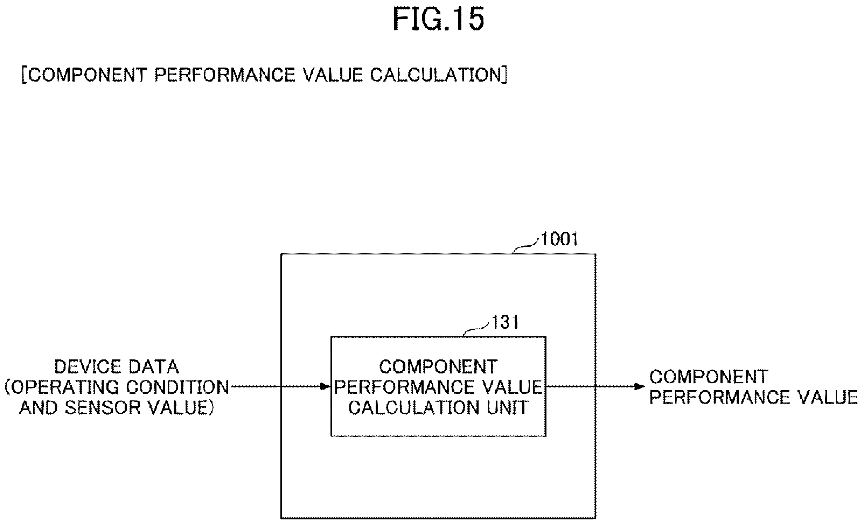

FIG. 15 is a functional block diagram of the controller 1001 according to the embodiment of the present disclosure. FIG. 15 illustrates a process of calculating a component performance value. The controller 1001 includes a component performance value calculation unit 131. Additionally, the controller 1001 functions as the component performance value calculation unit 131 by executing a program.

The component performance value calculation unit 131 acquires the data of the device 20 (for example, the operating condition of the device 20 and the sensor value of the device 20). The component performance value calculation unit 131 calculates the component performance value of the device 20 by calculation using the data of the device 20 (for example, the operating condition of the device 20 and the sensor value of the device 20).

As described, by performing learning using the component performance value calculated from the sensor value of the device 20 rather than using the sensor value of the device 20 itself, the learning is quickly converged.

### <Air Conditioner>

Here, an air conditioner, which is an example of the device 20, will be described. Here, the air conditioner may be a room air conditioner, a package air conditioner, a multi-air conditioner, an air conditioner of a central air conditioning system, or the like, or may be used not only for air conditioning but also for a refrigeration and freezing system.

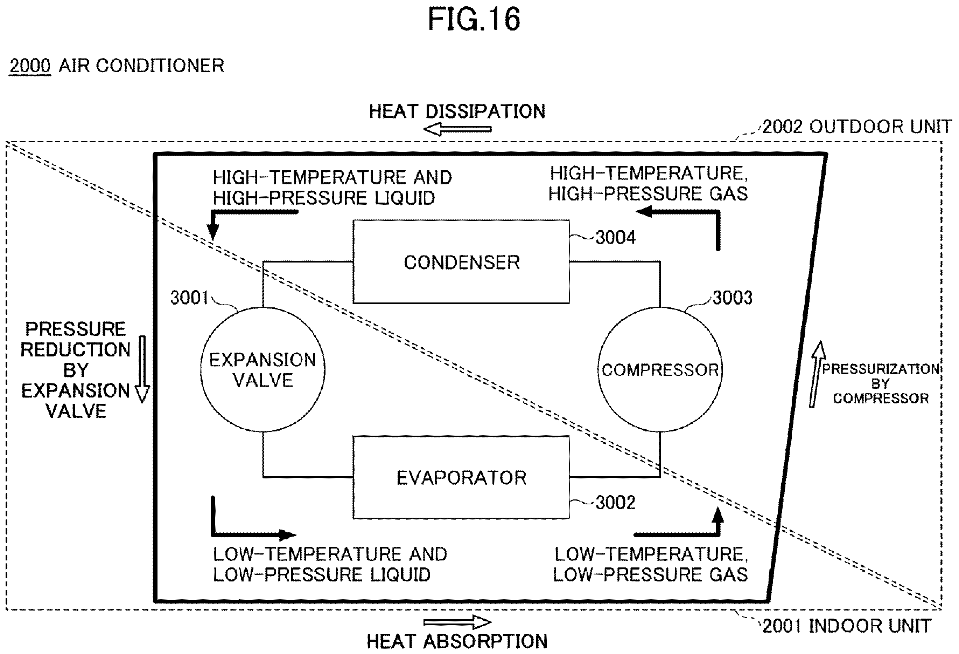

FIG. 16 is a hardware configuration diagram of an air conditioner 2000 according to the embodiment of the present disclosure. The air conditioner 2000 includes an indoor unit 2001 and an outdoor unit 2002. The indoor unit 2001 and the outdoor unit 2002 are connected by connection piping. Here, FIG. 16 illustrates a cooling cycle during the cooling of the air conditioner 2000.

The indoor unit 2001 includes an expansion valve 3001 and a heat exchanger (an evaporator) 3002. The outdoor unit 2002 includes a compressor 3003 and a heat exchanger (a condenser) 3004.

The flow of refrigerant will be described below. A high-temperature, high-pressure liquid becomes a low-temperature, low-pressure liquid by the expansion valve 3001 reducing the pressure thereof. In the evaporator 3002, the refrigerant changes from liquid to gas by heat absorption. A low-temperature, low-pressure gas becomes a high-temperature, high-pressure gas by the compressor 3003 pressurizing the pressure thereof. In the condenser 3004, the refrigerant changes from gas to liquid by heat dissipation.

Here, during the heating, the heat exchanger of the indoor unit 2001 functions as the condenser, and the heat exchanger of the outdoor unit 2002 functions as the evaporator, and the refrigerant flows in the direction opposite to that illustrated in FIG. 16.

### <Data of Device>

Here, the data of the device 20 will be described. The data of the device 20 is data that can be acquired during the operation of the device 20. For example, the data of the device 20 includes the operating condition of the device 20 (various conditions during the operation of the device 20), the sensor value of the device 20 (a value acquired by the sensor of the device 20), and the like. For example, the operating condition of the device 20 includes the outdoor temperature, the outdoor humidity, the indoor temperature, the indoor humidity, the compressor rotational speed, the indoor fan rotational speed, the outdoor fan rotational speed, and the like. For example, the sensor value of the device 20 includes the high pressure, the low pressure, the condensation temperature, the evaporation temperature, the liquid tube temperature, the gas tube temperature, the discharge temperature, the suction temperature, the outdoor temperature, the outdoor humidity, the indoor temperature, the indoor humidity, and the like. Here, the component performance value is calculated from the operating condition of the device 20 and the sensor value of the device 20.

### <Performance Value>

Here, the performance value of the device 20 will be described. For example, the performance value is a performance value related to an entirety of the device 20 (for example, air conditioner) or a performance value related to a component of the device 20 (for example, air conditioner). Here, the device performance value prediction apparatus 10 can calculate a performance value related to a component of the device 20 (the component performance value) from the operating condition and the sensor value of the device 20.

### <Overall Performance Value >

A performance value related to the entirety of the device (an overall performance value) will be described. For example, the overall performance value is a performance value related to a system of the air conditioner. For example, the overall performance value includes at least one of the cooling capacity, the heating capacity, the power consumption, or the coefficient of performance (COP) of the air conditioner. Each of these values will be described below.

The cooling capacity is a performance of the air conditioner during cooling.

The heating capacity is a performance of the air conditioner during heating.

The power consumption is the power consumption of the air conditioner.

The COP is the capacity per 1 kW of the power consumption of the air conditioner.

### <Component Performance Value>

The performance value related to the component of the device (the component performance value) will be described. For example, the component performance value is a performance value related to a component constituting the air conditioner. For example, the component performance value includes at least one of the degree of subcooling (SC), the degree of superheating (SH), the expansion valve opening degree (the EV opening degree), the condenser heat transfer capacity (the condenser KA), the evaporator heat transfer capacity (the evaporator KA), the compressor current, or the differential pressure of the air conditioner. Each of these values will be described below.

The filling amount of refrigerant (for example, a variation in the initial filling amount) is represented by, for example, the SC, the SH, and the EV opening degree.

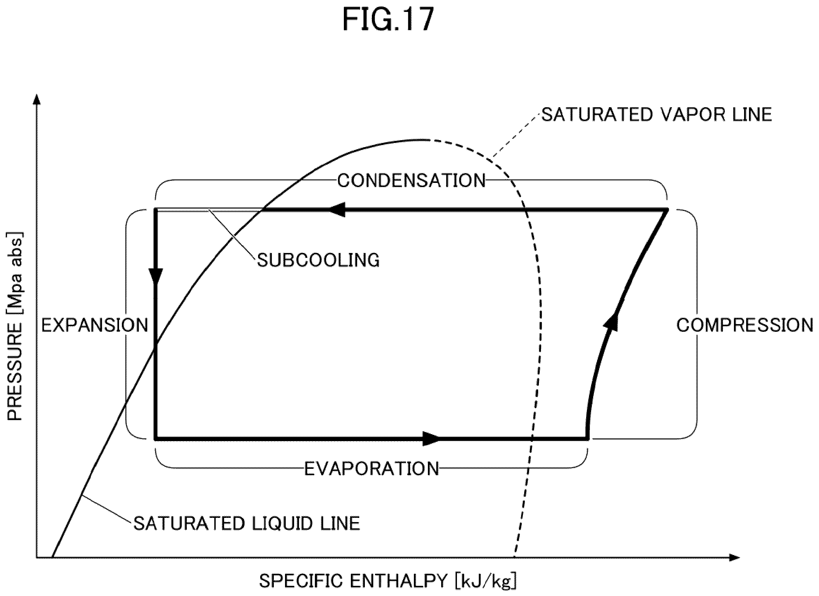

The degree of subcooling (SC) represents the filling amount of refrigerant in the air conditioner. The degree of subcooling (SC) is a value that changes depending on the filling amount of refrigerant during cooling. The details will be described later with reference to FIG. 17 later.

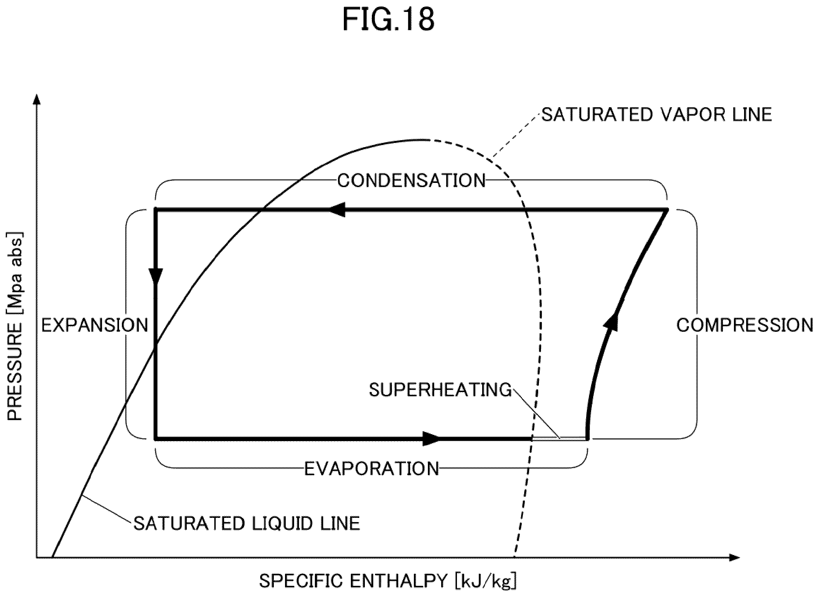

The degree of superheating (SH) represents the filling amount of refrigerant in the air conditioner. The degree of superheating (SH) is a value that changes depending on the filling amount of refrigerant during heating. The details will be described later with reference to FIG. 18 later.

The expansion valve opening degree(the EV opening degree) represents the filling amount of refrigerant in the air conditioner. The expansion valve opening degree (the EV opening degree) changes depending on the filling amount of refrigerant in the air conditioner even under the same operating conditions.

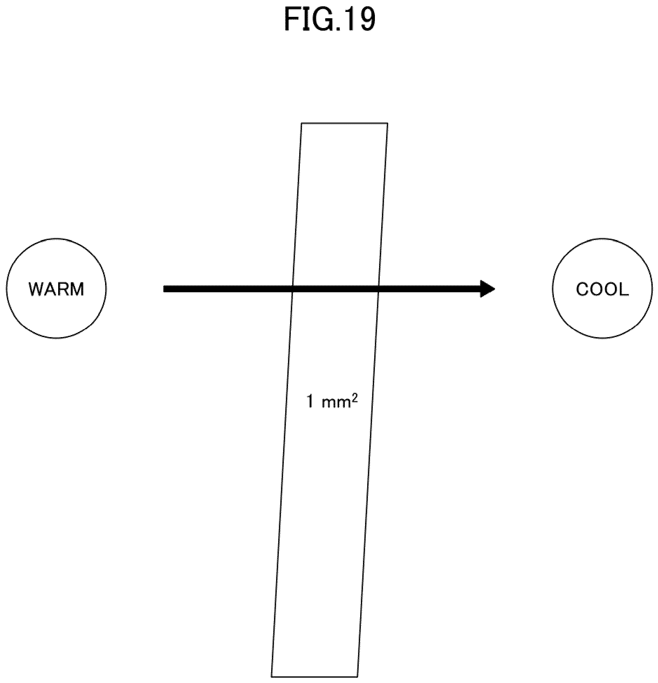

The condenser heat transfer capacity (the condenser KA) represents the performance of the condenser. The condenser is a heat exchanger for an outdoor unit during cooling and a heat exchanger for an indoor unit during heating. The condenser heat transfer capacity (the condenser KA) is a value that changes depending on the shape of the heat exchanger and the installed environment even under the same operating conditions. The details will be described later with reference to FIG. 19 later.

The evaporator heat transfer capacity (the evaporator KA) represents the performance of the evaporator. The evaporator is a heat exchanger for the indoor unit during cooling and for the outdoor unit during heating. The evaporator heat transfer capacity (the evaporator KA) is a value that changes depending on the shape of the heat exchanger and the installed environment even under the same operating conditions. The details will be described later with reference to FIG. 19 later.

The compressor current is the input (current) of the compressor. The compressor current represents the consumption current that changes depending on the efficiency of the compressor.

The differential pressure is a difference between the high pressure and the low pressure. The differential pressure represents pressure loss that changes in accordance with the length of the connecting piping. The differential pressure is suction pressure loss. The suction pressure loss is a value that changes in accordance with the length of the connecting piping even under the same operating conditions. The differential pressure is a high differential pressure. The high differential pressure is a value that changes in accordance with the length of the connecting piping even under the same operating conditions.

Other component performance values may be values related to the type of refrigerant of the air conditioner, a fan of the air conditioner, the inner diameter of the connecting piping, a bending pipe of the connecting piping, a short circuit, recorded data (the filling amount of refrigerant, the length of the connecting piping, and the like, and for example, how many kilograms of refrigerant is filled, how many meters of piping is connected, and the like), and the like.

### [Degree of Subcooling (SC)]

FIG. 17 is a graph for explaining the degree of subcooling (SC) according to the embodiment of the present disclosure. The refrigerant in the condenser changes from the gas phase to the liquid phase by heat dissipation, and the pressure and temperature during the phase change (saturation state) are constant. However, even if the pressure is the same, when the refrigerant becomes only liquid, the temperature of the liquid decreases. The state in which the refrigerant temperature falls below the saturation temperature is called subcooling (see FIG. 17), and the temperature difference at this time is called the degree of subcooling.

### [Degree of Superheating (SH)]

FIG. 18 is a graph for explaining the degree of superheating (SH) according to the embodiment of the present disclosure. The refrigerant in the evaporator changes from the liquid phase to the gas phase by heat absorption, and the pressure and temperature during the phase change (saturation state) are constant. However, even if the pressure is the same, when the refrigerant becomes only gas, the temperature of the gas increases. The state in which the refrigerant temperature rises above the saturation temperature is referred to as superheating (see FIG. 18), and the temperature difference at this time is referred to as the degree of superheating.

### [Heat Transfer Capacity (KA)]

FIG. 19 is a diagram for explaining the heat transfer capacity (KA) according to the embodiment of the present disclosure. The heat transfer between outer and inner surfaces of the heat exchanger is referred to as heat transmission. The heat transmission rate per 1 mm² and per 1 hour is referred to as K, and the area of the heat exchanger is referred to as A, which indicates the performance of the heat exchanger.

### <Method>

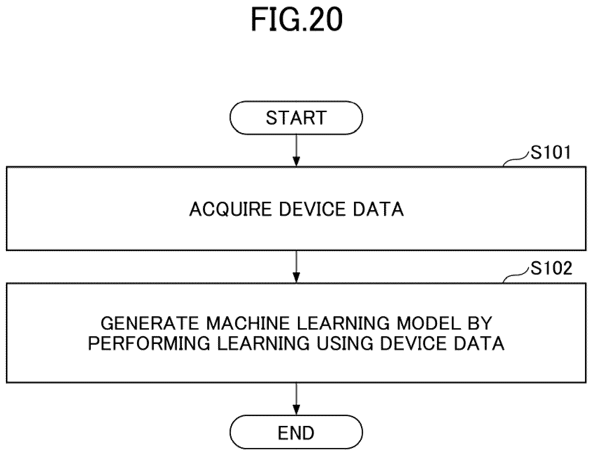

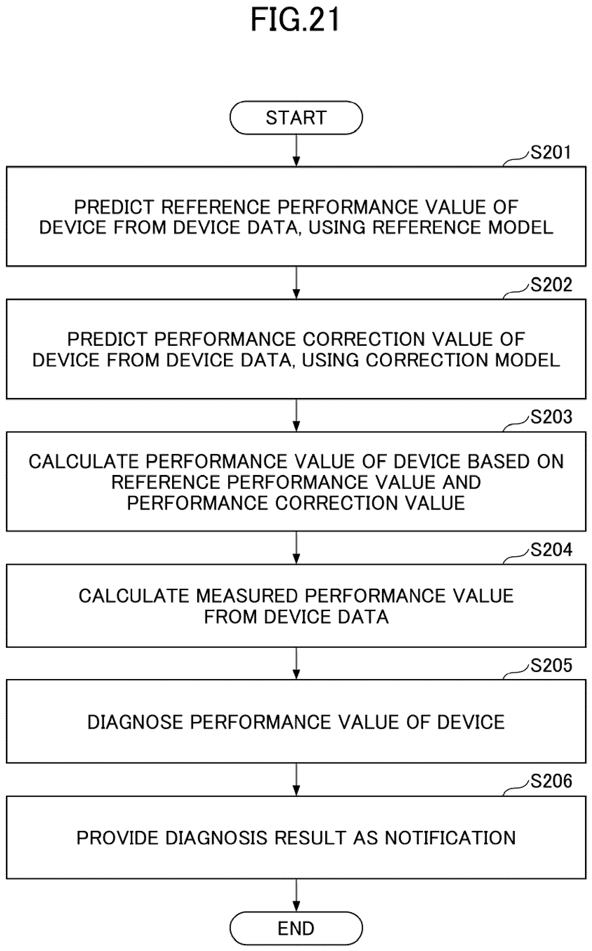

The learning process will be described below with reference to FIG. 20, and the prediction process will be described with reference to FIGS. 21 to 24.

FIG. 20 is a flowchart of the learning process according to the embodiment of the present disclosure.

In step 101 (S101), the device performance value prediction apparatus 10 acquires the training data.

In step 102 (S102), the device performance value prediction apparatus 10 generates the machine learning model by performing learning using the training data acquired in S101.

The case of Parallel Connection described above will be described.

### [Reference Model]

Specifically, the device performance value prediction apparatus 10 acquires at least data of a device different from the target device (that is, the device for which the performance value is desired to be obtained), and generates the reference model by performing learning using the acquired data of the device. For example, the reference model is a model configured to output the performance value (the reference performance value) of the device in response to the operating condition of the device being input.

### [Correction Model]

Specifically, the device performance value prediction apparatus 10 acquires the data of the device, and generates the correction model by performing learning using the acquired data of the device. For example, the correction model is a model configured to output the performance correction value in response to the operating condition and the component performance value of the device being input.

Hereinafter, the learning process in Series 1, the learning process in Series 2, and the learning process in the additional learning described above will be described.

In Series 1, the device performance value prediction apparatus 10 generates the reference model (the model configured to output the reference performance value of the device in response to the data of the device being input) by performing learning using the training data (for example, the data of the device for each device type and the reference performance value, which is a performance value for each device type). Additionally, the device performance value prediction apparatus 10 generates the correction model (the model configured to output the corrected performance value of the device in response to the reference performance value of the device being input) by performing learning using the training data (for example, the "reference performance value", which is a performance value for each device type, and the "corrected performance value", which is a performance value of the device type for each site). As described, the device performance value prediction apparatus 10 can generate the reference model for each device type of the device 20 and generate the correction model for each site where the device 20 of the device type is installed.

In Series 2, the device performance value prediction apparatus 10 generates the correction model (the model configured to output the "corrected data of the device" in response to the data of the device being input) by performing learning using the training data (for example, the data of the device for each site and "the corrected data of the device", which is the data of the device for the predetermined site (the reference site)). Additionally, the device performance value prediction apparatus 10 generates the correction model (the model configured to output the corrected performance value of the device in response to the corrected data of the device being input) by performing learning using the training data (for example, "the corrected data of the device" and the "reference performance value", which is the performance value for each device type). As described, the device performance value prediction apparatus 10 generates the correction model for each site where the device 20 is installed and generates the reference model for each device type of the device 20.

In the additional learning, the device performance value prediction apparatus 10 generates the reference model (the model configured to output the reference performance value of the device in response to the data of the device being input) by performing learning using the training data (for example, the data of the device for each device type and the reference performance value, which is a performance value for each device type). Then, the device performance value prediction apparatus 10 performs additional learning on the reference model with the data (the data of the device and the performance value of the device) in the site where the device 20 is installed. As described, the device performance value prediction apparatus 10 generates the reference model for each device type of the device 20 and performs additional learning on the reference model with the data (the data of the device and the performance value of the device) in the site where the device 20 is installed.

FIG. 21 is a flowchart of the prediction process (in Parallel Connection) according to the embodiment of the present disclosure.

In step 201 (S201), the device performance value prediction apparatus 10 predicts the reference performance value of the device 20 from the data of the device 20, using the reference model. For example, the device performance value prediction apparatus 10 inputs the operating condition of the device 20 into the reference model and causes it to output the reference performance value of the device 20.

In step 202 (S202), the device performance value prediction apparatus 10 predicts the performance correction value of the device 20 from the data of the device 20, using the correction model. For example, the device performance value prediction apparatus 10 inputs the operating condition and the component performance value of the device 20 into the correction model and causes it to output the performance correction value of the device 20.

Here, S201 and S202 may be performed at the same time, or the order may be reversed.

In step 203 (S203), the device performance value prediction apparatus 10 calculates the performance value of the device 20 based on the reference performance value predicted in S201 and the performance correction value predicted in S202. For example, the device performance value prediction apparatus 10 adds or multiplies the performance correction value to the reference performance value.

In step 204 (S204), the device performance value prediction apparatus 10 calculates the measured performance value of the device 20 from the data of the device 20. For example, the device performance value prediction apparatus 10 calculates the measured performance value of the device 20 from the operating condition and the sensor value of the device 20.

Here, S204 may be performed simultaneously with any of S201 to S203, or may be performed before S201, before S202, or before S203.

In step 205 (S205), the device performance value diagnosis apparatus 11 diagnoses the device 20. For example, the device performance value diagnosis apparatus 11 calculates the index related to performance degradation from the performance value of the device 20 calculated in S203 and the measured performance value of the device 20 calculated in S204.

In step 206 (S206), the device performance value diagnosis apparatus 11 notifies the result of the diagnosis in S205 (for example, transmitting the result of the diagnosis to the terminal of the administrator or user of the device 20). For example, the device performance value diagnosis apparatus 11 provides a notification as the performance degradation, using the index related to the performance degradation calculated in S205. For example, the device performance value diagnosis apparatus 11 can notify the presence or absence of the degradation of the device 20 and the degree of the degradation of the device 20.

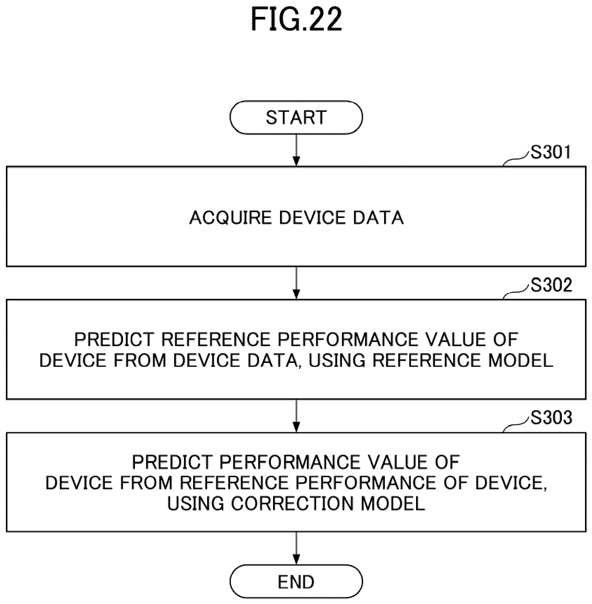

Hereinafter, the prediction process in Series 1, the prediction process in Series 2, and the prediction process in the additional learning described above will be described with reference to FIGS. 22 to 24. Here, the diagnosis of the device performance value is substantially the same as S204 to S206 of FIG. 21, and thus the description will be omitted.

FIG. 22 is a flowchart of the prediction process (in Series 1) according to the embodiment of the present disclosure.

In step 301 (S301), the device performance value prediction apparatus 10 acquires the data of the device 20.

In step 302 (S302), the device performance value prediction apparatus 10 predicts the reference performance value of the device 20 from the data of the device 20 acquired in S301, using the reference model. Specifically, the device performance value prediction apparatus 10 inputs the data of the device 20 into the reference model and causes it to output the reference performance value of the device 20.

In step 303 (S303), the device performance value prediction apparatus 10 predicts the corrected performance value of the device 20, using the correction model (specifically, the model configured to output the corrected performance value of the device in response to the reference performance value of the device being input) from the reference performance value of the device 20 predicted in S302. Specifically, the device performance value prediction apparatus 10 inputs the reference performance value of the device 20 into the correction model and causes it to output the corrected performance value of the device 20.

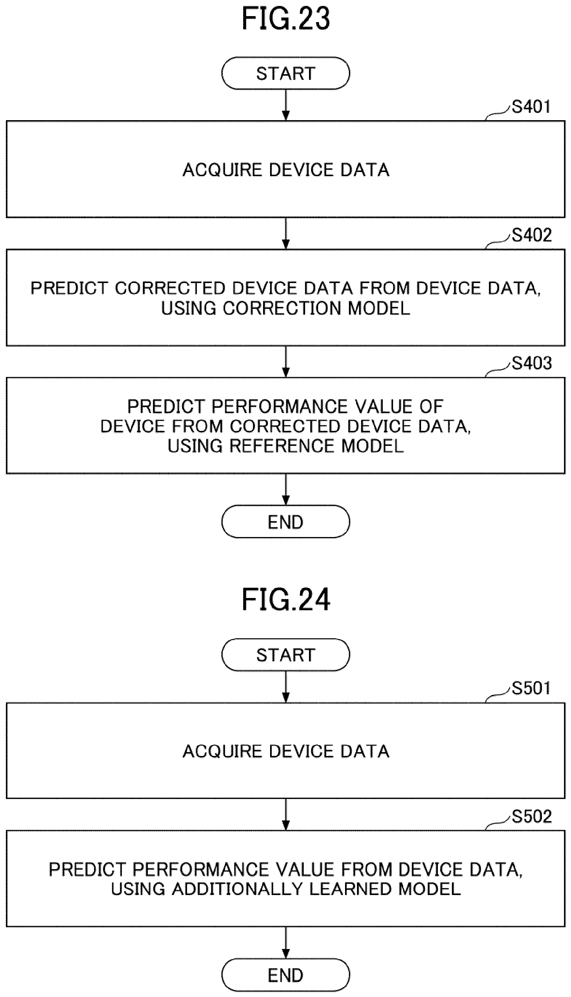

FIG. 23 is a flowchart of the prediction process (in Series 2) according to the embodiment of the present disclosure.

In step 401 (S401), the device performance value prediction apparatus 10 acquires the data of the device 20.

In step 402 (S402), the device performance value prediction apparatus 10 predicts the corrected data of the device 20 from the data of the device 20 acquired in S401, using the correction model. Specifically, the device performance value prediction apparatus 10 inputs the data of the device 20 into the correction model and causes it to output the corrected data of the device 20.

In step 403 (S403), the device performance value prediction apparatus 10 predicts the performance value (that is, the corrected performance value) of the device 20 from the corrected data of the device 20 predicted in S402, using the reference model. Specifically, the device performance value prediction apparatus 10 inputs the corrected data of the device 20 into the reference model and causes it to output the performance value (that is, the corrected performance value) of the device 20.

FIG. 24 is a flowchart of the prediction process (in the additional learning) according to the embodiment of the present disclosure.

In step 501 (S501), the device performance value prediction apparatus 10 acquires the data of the device 20.

In step 502 (S502), the device performance value prediction apparatus 10 predicts the performance value (that is, the corrected performance value) from the data of the device 20 acquired in S501 by using the model obtained by performing additional learning on the reference model.

Although the embodiments have been described above, it will be understood that various changes in form and details can be made without departing from the spirit and scope of the claims.

This international application claims priority to Japanese Patent Application No. 2022-144616, filed on September 12, 2022, the entire contents of which are hereby incorporated by reference.

### Description of reference symbols

1 device performance value diagnosis system
10 device performance value prediction apparatus
11 device performance value diagnosis apparatus
20 device
101 reference model learning unit
102 correction model learning unit
103 additional learning unit
111 reference performance value prediction unit
112 performance correction value prediction unit
113 performance value calculation unit
114 performance value correction unit
115 device data correction unit
116 performance value prediction unit
121 measured performance value calculation unit
122 diagnosis unit
123 notification unit
131 component performance value calculation unit
1001 controller
1002 main storage unit
1003 auxiliary storage unit
1004 input unit
1005 output unit
1006 interface unit
2000 air conditioner
2001 indoor unit
2002 outdoor unit
3001 expansion valve
3002 evaporator
3003 compressor
3004 condenser

## Claims

1. A method comprising:
a step of acquiring data in a state in which a device is installed; and
a step of predicting, by using the data in the state in which the device is installed and at least a reference model, a performance value in an installed state, corresponding to a predetermined period of the device.

2. The method as claimed in claim 1,
wherein the step of the acquiring includes acquiring the data in the state where the device is installed in predetermined sites,
wherein the step of the predicting includes predicting, by using the data in the state where the device is installed in the predetermined sites and at least the reference model configured to predict a reference performance value of the device from data of the device generated for each device type of the device, a performance value obtained by correcting an individual difference between the sites.

3. The method as claimed in claim 2, wherein the step of the predicting includes predicting, by using two models including the reference model and a model configured to correct the reference performance value, the performance value obtained by correcting the individual difference between the sites.

4. The method as claimed in claim 1,
wherein the step of the predicting includes:
predicting, by using the data in the state in which the device is installed and the reference model, a reference performance value of the device; and
predicting, by using the data in the state in which the device is installed and a correction model configured to correct the reference performance value of the device predicted by the reference model, the performance value in the installed state, corresponding to the predetermined period of the device.

5. The method as claimed in claim 4, further comprising a step of generating the correction model by performing learning with data at the predetermined period in the state where the device is installed, and performing learning using data including at least an operating condition of the device as an explanatory variable.

6. The method as claimed in claim 1, wherein the step of the predicting includes predicting ,by using the data in the state in which the device is installed and a model generated using the reference model, the performance value in the installed state, corresponding to the predetermined period of the device.

7. The method as claimed in claim 6, further comprising a step of performing additional learning on the reference model with data at the predetermined period in the state in which the device is installed.

8. The method as claimed in any one of claims 1 to 7, further comprising a step of calculating an index related to performance degradation from the predicted performance value of the device and the performance value of the device calculated from the acquired data of the device.

9. The method as claimed in claim 8, further comprising a step of providing a notification as the performance degradation by using the calculated index related to the performance degradation.

10. The method as claimed in claim 4 or 5, wherein a device used to generate the correction model is the same device as and of the same device type as the device to be predicted.

11. The method as claimed in claim 4 or 5, wherein a device used to generate the correction model is one or more different devices of the same device type as the device to be predicted.

12. The method as claimed in claim 4 or 5, wherein devices used to generate the correction model are the same devices of the same device type as the device to be predicted and one or more different devices of the same device type as the device to be predicted.

13. The method as claimed in claim 4 or 5, wherein training data of the reference model and the correction model are test data, field data, or simulation data.

14. The method as claimed in claim 4 or 5, wherein training data of the reference model and the correction model are data when the device is in a normal operating state.

15. A device performance value prediction system comprising a controller configured to predict a performance value in an installed state, corresponding to a predetermined period of a device,
wherein the controller
acquires data in the state in which the device is installed, and
predicts, by using the data in the state in which the device is installed and at least a reference model, the performance value in the installed state, corresponding to the predetermined period of the device.

16. The device performance value prediction system as claimed in claim 15, wherein the controller
predicts, by using the data in the state in which the device is installed and the reference model, a reference performance value of the device, and
predicts, by using the data in the state in which the device is installed and a correction model configured to correct the reference performance value of the device predicted by the reference model, the performance value in the installed state, corresponding to the predetermined period of the device.

17. The device performance value prediction system as claimed in claim 15, wherein the controller predicts, by using the data in the state in which the device is installed and a model generated by using the reference model, the performance value in the installed state, corresponding to the predetermined period of the device.

18. A program for causing a device performance value prediction system, including a controller configured to predict a performance value in an installed state, corresponding to a predetermined period of a device, to perform:
a procedure of acquiring data in the state in which the device is installed; and
a procedure of predicting, by using the data in the state in which the device is installed and at least a reference model, the performance value in the installed state, corresponding to the predetermined period of the device.
